Europäisches Patentamt

European Patent Office

Office européen des brevets

(19)

(11) Veröffentlichungsnummer: **0 039 446**
**A1**

(12) **EUROPÄISCHE PATENTANMELDUNG**

(21) Anmeldenummer: **81103038.6**

(22) Anmeldetag: **22.04.81**

(51) Int. Cl.³: **F 24 D 3/00**

(30) Priorität: **24.04.80 CH 3152/80**

(43) Veröffentlichungstag der Anmeldung: **11.11.81**
**Patentblatt 81/45**

(84) Benannte Vertragsstaaten: **AT BE DE FR GB IT LU NL SE**

(71) Anmelder: **Elias, Jiri, Chemin de la Perose, CH-1803 Chardonne (CH)**

(84) Benannte Vertragsstaaten: **DE FR GB IT SE AT**

(71) Anmelder: **Technolizenz Establishment, Austrasse 4, FL-9490 Vaduz (LI)**

(84) Benannte Vertragsstaaten: **BE LU NL**

(72) Erfinder: **Elias, Jiri, Chemin de la Perose, CH-1803 Chardonne (CH)**

(74) Vertreter: **Büchel, Kurt F. Dr., Austrasse 4, FL-9490 Vaduz (LI)**

(54) **Konstruktionsaufbau für eine flächenförmige Raumbeheizung.**

㉗ Konstruktionsaufbau für eine flächenförmige Raumbeheizung, mit einem Vertiefungen für die Aufnahme von Heizelementen aufweisenden Isolationselement, bei dem die den Heizelementen (3) zugewandte Seite des Isolationselementes (2) im Querschnitt gesehen wellenförmig verläuft und der Boden-, Wandbelag od. dgl. (5) − gegebenenfalls unter Zwischenschaltung eines den Hohlraum zwischen den Heizelementen (3) und dem Belag (5) erfüllenden, festen vorzugsweise Wärme ableitenden Mediums (4) − auf den Wellenbergen (x) ruht.

0039446

Seit vielen Jahren werden für die Raumbeheizung Boden-, Wand- und Deckenheizungen verwendet, bei denen auf wenigstens eine Fläche des zu beheizenden Raumes schlangenförmig verlegte, elektrische oder von einem flüssigen Wärmeträger durchflossene Heizelemente aufgebracht werden. Um Wärmeverluste in die dem Raum abgewandte Richtung zu vermeiden, befindet sich hinter den Heizelementen eine Schicht aus Isoliermaterial; die Wärme strahlt von den Heizelementen in den Raum. Man ist bisher bei wirtschaftlichem Abstand der Heizelemente voneinander nicht unter 3° C Temperaturdifferenz zwischen den Heizelementen einerseits und der Mitte des Abstandes zwischen zwei Heizelementen andererseits gekommen, dies insbesondere dann, wenn in dem Isoliermaterial Vertiefungen angeordnet waren, in denen die Heizelemente verlegt waren, und ein allfälliger Boden-, Wandbelag o. dgl. auf dem Isoliermaterial ruhte. Man hatte nun bereits vorgeschlagen, die Heizelemente mit Lamellenblechen zu umhüllen, die die Wärme auch in die Zwischenräume zwischen den Heizelementen ableiten, bezw. dort abstrahlen. Dies ist jedoch eine sehr komplizierte und teuere Massnahme.

Die Erfindung betrifft nun einen Konstruktionsaufbau für eine flächenförmige Raumbeheizung, mit einem Vertiefungen für die Aufnahme von Heizelementen aufweisenden Isolationselement, und ist dadurch gekennzeichnet, dass die den Heizelementen zugewandte Seite des Isolationselementes im Querschnitt gesehen wellenförmig verläuft und der Boden-, Wandbelag o. dgl. - gegebenenfalls unter Zwischenschaltung eines den Hohlraum zwischen den Heizelementen und dem Belag erfüllenden, festen, vorzugsweise Wärme ableitenden Mediums - auf den Wellenbergen ruht, die zwischen den Heizelementen angeordnet sind.

Ruht der Boden-, Wandbelag o.dgl. direkt auf den Wellenbergen, dann bildet jedes Wellental einen Kanal für seine Heizschlange und die Luft kann einen Teil der Wärme durch natürliche Konvektion - zusätzlich zu der von den Heizelementen ausgehenden Strahlung - abführen. Durch die Wellenberge des Isolationselementes hingegen kommt es in der Mitte des Abstandes zwischen zwei Wellentälern, bezw. Heizelementen dazu, dass dort, wo wegen des längsten Weges die Wärme sowohl durch Strahlung als auch durch Konvektion am langsamsten hingelangt, die Isolation am besten ist: dort kann noch weniger Wärme nach "hinten" abfliessen als beim Heizelement direkt. Daraus resultiert eine bedeutende Vergleichmässigung des Temperaturverlaufes an der beheizten Raumoberfläche.

Darüber hinaus ergibt sich aus einem solchen Konstruktionsaufbau ein weiterer Vorteil: um einen Boden-, Wandbelag o.dgl. über frei auf flachen Isolationsplatten verlegten Heizschlangen anzubringen, waren bisher aufwendige Trägermassnahmen erforderlich. Erfindungsgemäss kann jedoch eine tragende Zwischenkonstruktion entfallen, was insbesondere dann von Bedeutung ist, wenn die Heizschlangen relativ eng (z.B. im Abstand von nur 20 cm) verlegt sind; eine Trägerkonstruktion dafür wäre völlig unwirtschaftlich. Die erfindungsgemässen wellenförmigen Isolationselemente ersetzen jedoch in einfachster Weise eine solche Trägerkonstruktion.

Ist der Hohlraum zwischen dem Isolationselement, dem Heizelement und dem Boden-, Wandbelag o.dgl. von einem festen vorzugsweise Wärme ableitenden Medium, wie z.B. einem Mörtel, schwimmenden Estrich, o.dgl. erfüllt, dann wird im Normalfall die erwähnte
Konvektion durch Leitung ersetzt, und es gelten dieselben Bedingungen und Vorteile wie soeben erwähnt. Die grössere Stärke
der Isolationselemente zwischen den Heizelementen bewirkt in
diesem Fall auch, dass dort das Medium, z.B. der Estrich, eine
geringere Stärke aufweist; er bietet also weniger Wärmewiderstand und eine geringere Wärmeträgheit: die Raumtemperatur
spricht rascher auf die Heizung an.

Bei dieser Konstruktion können jedoch in ganz besonders vorteilhafter Weise die Heizelemente in an sich bekannten Umhüllungsrohren verlegt werden, in denen Luft durch natürliche Konvektion
oder - im Falle grösserer Wärmemengen - durch Zwangsventilation
zirkuliert. Einerseits strahlen nun die Heizelemente auf die
Innenwand des Umhüllungsrohres; dieses gibt die Wärme an das
feste Medium ab. Ist das Umhüllungsrohr ein Rippenrohr, dann
steht für die Strahlung und für die Wärmeabgabe an das feste
Medium eine viel grössere Oberfläche zur Verfügung. Andererseits wird ein Teil der Wärme durch die zirkulierende Luft in
Form von Konvektion in den Raum gebracht, soferne die Umhüllungsrohre mit dem Rauminneren in Verbindung stehen. Daher wirken
in diesem Fall sowohl Strahlung, als auch Konvektion und
Leitung zur Wärmeübertragung von den Heizelementen auf die
Raumoberfläche zusammen: es ergibt sich eine optimale Vergleichmässigung des Temperaturverlaufes, und man findet mit
weit niedrigeren Temperaturen der Heizelemente als bisher das Auslangen zur Erreichung einer bestimmten Raumtemperatur unter sonst gleichen Aussenbedingungen. Wiederum ist nämlich in der Mitte zwischen zwei Heizelementen, also dort wohin die Wärme den längsten Weg zurückzulegen hat, die Isolierung am grössten, die den Verlust nach "hinten" reduzieren soll.

Die Verwendung eines Rippenrohres in Kombination mit dem wellenförmigen Isolationselement hat aber noch eine andere Wirkung: das feste Medium bedeckt nicht nur die nach dem Raum hin liegende Seite des Heizelementes, bezw. des Umhüllungsrohres, sondern umhüllt dieses nahezu ganz, oder überhaupt vollständig, so dass die Strahlung des Heizelementes, die ja nach allen Seiten gerichtet ist, auch "unten", bezw. "hinten" dem festen Medium Wärme zuführt, die dieses ableiten kann.

Es hat sich als besonders zweckmässig erwiesen, wenn der Radius eines Wellentales wesentlich grösser ist als der Radius des Heizelementes oder seines Umhüllungsrohres. In diesem Fall ist der Wärmeübergang von der gesamten Oberfläche des Heizelementes oder seines Umhüllungsrohres auf die allenfalls zirkulierende Luft oder das umhüllende feste Medium am grössten. Die Heizelemente, bezw. Umhüllungsrohre sollen im Querschnitt zu wenigstens 75 %, vorzugsweise 100 % ihres Umfanges von dem festen Medium umhüllt sein.

0039446

Sieht man von der Verwendung aufwendiger Zwischenträgerkonstruktionen ab , und geht man von dem gebräuchlicheren Aufbau eines schwimmenden Estrichs aus, dann bietet das erfindungsgemässe Isolationselement noch einen weiteren Vorteil: ein Teil des ansonsten den Zwischenraum zwischen zwei Heizschlangen ausfüllenden Betonestrichs wird durch die Wellenberge des viel leichteren Isolationselementes ersetzt, so dass der gesamte Fussbodenaufbau leichter wird, was aus Gründen der Baustatik grosse Bedeutung hat. Es hat sich gezeigt, dass es genügt, wenn die Stärke des festen Mediums über den Umhüllungsrohren höchstens 2 cm, über den Wellenbergen höchstens 4 cm beträgt.

In einer weiteren Ausgestaltung der Erfindung wird vorgeschlagen, dass an wenigstens einem Ende jeden Wellentales auf einer Isolationsplatte zwei kurze Erhöhungen an den einander gegenüber liegenden Böschungen angeordnet sind, die den Radius des Wellentales auf wenigstens einem halbkreisförmigen Querschnitt auf den Radius des Heizelementes, bezw. seines Umhüllungsrohres verringern, so dass dieses durch Klemmwirkung festgehalten werden kann, was die Montage erleichtert.

Es hat sich als besonders zweckmässig erwiesen, die erfindungsgemässen Isolationselemente aus Hartschaum, z.B. auf Polystyroloder Polyurethanbasis zu fertigen, da sie dann genügend Festigkeit aufweisen, um den Anforderungen zu genügen.

In besonderen Fällen kann es vorteilhaft sein, wenn an der den Heizelementen zugewandten Seite des Isolationselementes Wärmeleitlamellen, wärmereflektierende Folien o.dgl. angeordnet sind.

- 6 -

0039446

Die Erfindung wird in der Zeichnung beispielhaft näher erläutert. Es zeigen:


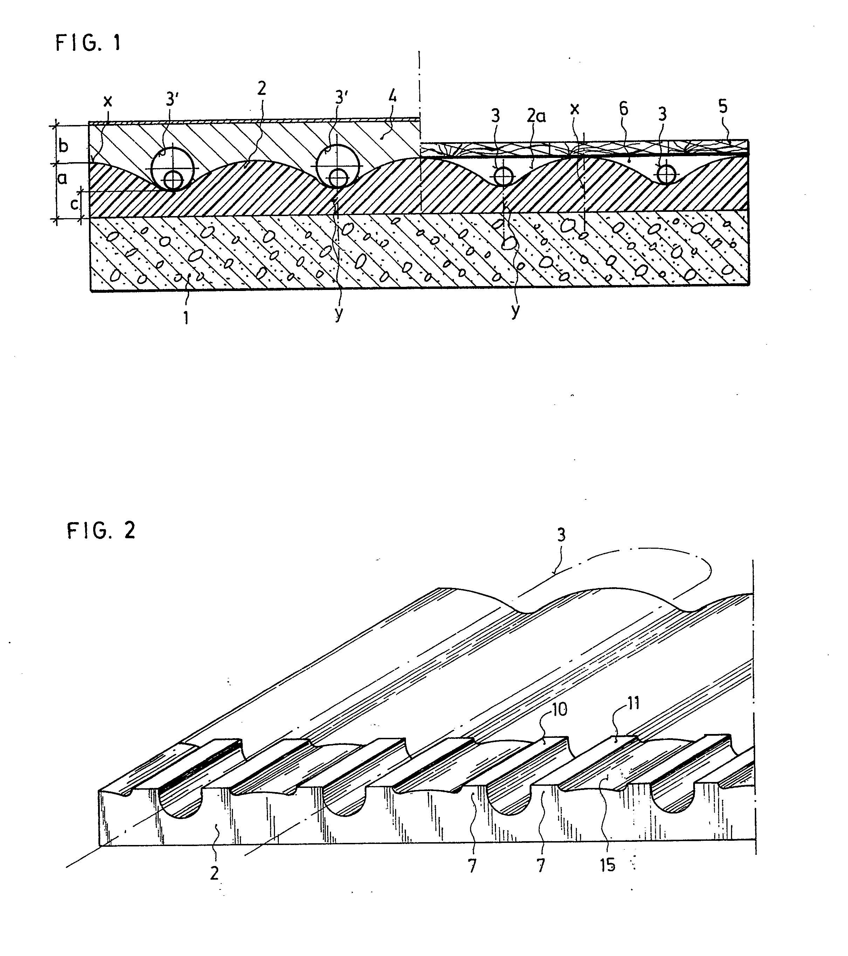

Fig. 1    einen Querschnitt durch zwei Ausführungsformen des erfindungsgemässen Konstruktionsaufbaus am Beispiel einer Fussbodenheizung: links ein Aufbau mit Unterlagsboden (schwimmendem Estrich), rechts als "Trocken"aufbau mit Ueberkonstruktion;


Fig. 2    eine perspektivische Aufsicht auf das erfindungsgemässe Isolationselement.


Auf einer tragenden Fussbodenkonstruktion 1 liegen Isolationselemente 2 mit wellenförmiger Oberfläche. Sie weisen im Bereich der Wellenberge x eine maximale Stärke a auf, im Bereich der Wellentäler y eine Stärke c. In den Wellentälern liegen Heizschlangen 3, gegebenenfalls in Umhüllungsrohren 3'. Ueber dem Ganzen befindet sich ein schwimmender Estrich (Unterlagsboden) 4 in einer Stärke, dass der Abstand zwischen den Wellenbergen und der Fussbodenoberkante b ist.


In der Ausführung des Trockenaufbaus mit Ueberkonstruktion liegen auf den Wellenbergen Fussbodenplatten 5 auf und schliessen in den Wellentälern Hohlräume 6 ab, in denen Luft zirkulieren kann. An einem Ende des Isolationselementes finden sich beidseitig des Wellentales kurze Erhöhungen 7, die den Krümmungsradius des Wellentales auf denjenigen der Heizschlangen, bezw. Umhüllungsrohre verringern, so dass diese eingeklemmt werden können, um die Montage zu erleichtern.

0039446

P A T E N T A N S P R U E C H E

1. Konstruktionsaufbau für eine flächenförmige Raumbeheizung, mit einem Vertiefungen für die Aufnahme von Heizelementen aufweisenden Isolationselement, dadurch gekennzeichnet, dass die den Heizelementen (3) zugewandte Seite des Isolationselementes (2) im Querschnitt gesehen wellenförmig verläuft und der Boden-, Wandbelag o.dgl. (5) - gegebenenfalls unter Zwischenschaltung eines den Hohlraum zwischen den Heizelementen (3) und dem Belag (5) erfüllenden, festen, vorzugsweise Wärme ableitenden Mediums (4) - auf den Wellenbergen (x) ruht, die zwischen den Heizelementen (3) angeordnet sind.

2. Aufbau nach Anspruch 1, dadurch gekennzeichnet, dass der Radius eines Wellentales (y) wesentlich grösser ist als der Radius des Heizelementes (3) oder seines Umhüllungsrohres (3').

3. Aufbau nach Anspruch 1 oder 2, dadurch gekennzeichnet, dass die Heizelemente (3), bezw. Umhüllungsrohre (3') im Querschnitt zu wenigstens 75 %, vorzugsweise zu 100 % ihres Umfanges von dem festen Medium (4) umhüllt sind.

0039446

4. Aufbau nach einem der vorhergehenden Ansprüche, dadurch gekennzeichnet, dass die Stärke des festen Mediums (4) über den Umhüllungsrohren (3') höchstens 2 cm, über den Wellenbergen (y) höchstens 4 cm beträgt.

5. Aufbau nach einem der vorhergehenden Ansprüche, dadurch gekennzeichnet, dass an wenigstens einem Ende jeden Wellentales auf einer Isolationsplatte (2) zwei kurze Erhöhungen (7) an den einander gegenüber liegenden Böschungen angeordnet sind, die den Radius des Wellentales auf wenigstens einem halbkreisförmigen Querschnitt auf den Radius des Heizelementes (3), bezw. seines Umhüllungsrohres (3') verringern.

6. Aufbau nach einem der vorhergehenden Ansprüche, dadurch gekennzeichnet, dass die Isolationselemente (2) aus Hartschaum, z.B. auf Polystyrol- oder Polyurethanbasis bestehen.

7. Aufbau nach einem der vorhergehenden Ansprüche, dadurch gekennzeichnet, dass an der den Heizelementen (3) zugewandten Seite des Isolationselementes (2) Wärmeleitlamellen, wärmereflektierende Folien o.dgl. angeordnet sind.

FIG. 1

FIG. 2

Europäisches
Patentamt

**EUROPÄISCHER RECHERCHENBERICHT**

0039446

EP 81 10 3038

| Kategorie | EINSCHLÄGIGE DOKUMENTE | | KLASSIFIKATION DER ANMELDUNG (Int Cl.) |
|---|---|---|---|
| | Kennzeichnung des Dokuments mit Angabe, soweit erforderlich, der maßgeblichen Teile | betrifft Anspruch | |
| X | DE - A - 2 926 685 (PEST MEGYEI MUANYAGIPARI VALLALAT) <br><br> * Seite 6, Absatz 2; Seite 7, letzter Absatz - Seite 8, Absatz 2; Figuren 1,2 * <br><br> -- <br><br> FR - A - 837 927 (STRALINGSWARMTE) <br><br> * Seite 4, Zeile 85 - Seite 5, Zeile 2; Figur 7 * <br><br> ---- | 1,2,6 7 <br><br><br><br><br><br> 1-3,7 | F 24 D 3/00 <br><br><br><br><br><br><br><br> RECHERCHIERTE SACHGEBIETE (Int. Cl.) <br><br> F 24 D <br> E 04 F |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-07-1981 | VAN GESTEL |

EPA form 1503.1  06.78